# FASCICULE DE BREVET EUROPEEN

(11) **EP 2 357 493 B1**
(45) Date de publication et mention de la délivrance du brevet: **05.09.2012**
(21) Numéro de dépôt: 11153219.8
(22) Date de dépôt: 03.02.2011
(51) Int. Cl.: G01S 19/21, G01S 19/49

(54) **Procédé et dispositif d'authentification d'une trajectoire calculée à partir de signaux de radiolocalisation**
Verfahren und Vorrichtung zur Authentifizierung einer Trajektorie, die mit Hilfe von Funklokalisierungssignalen berechnet wird
Method and device for authenticating a trajectory calculated according to radiolocation signals

(30) Priorité: 12.02.2010 FR 1000588
(43) Date de publication de la demande: 17.08.2011
(73) Titulaire: Thales, 92200 Neuilly Sur Seine (FR)
(72) Inventeur: Kubrak, Damien, 31400 Toulouse (FR)
(74) Mandataire: Esselin, Sophie

(56) Documents cités:
- US-A- 5 416 712
- US-A1- 2007 194 984
- US-A1- 2007 247 362
- JON S WARNER ET AL: "GPS Spoofing Countermeasures", INTERNET CITATION, 1 décembre 2003 (2003-12-01), XP007914429, Extrait de l'Internet: URL:http://www.homelandsecurity.org/bullet in/dual%20benefit/warner_gps_spoofing.html [extrait le 2010-08-13]

## Description

Le domaine de l'invention concerne les dispositifs de navigation par satellite et plus précisément un dispositif et un procédé d'authentification de trajectoire calculée à partir de signaux de radiolocalisation.

Avec l'amélioration des performances des systèmes de navigation par satellites, le développement d'applications de navigation est en plein essor. Par exemple, le système de positionnement par satellite européen GALILEO permettra le développement de services payants pour des applications commerciales avec une fiabilité améliorée et une garantie de continuité du signal. Le signal contiendra des données relatives aux services commerciaux supplémentaires offerts. En échange de la redevance, l'opérateur de GALILEO pourra offrir certaines garanties de service. Les principales applications concernent des utilisateurs professionnels qui sont prêts à payer pour disposer d'un service garanti par l'opérateur GALILEO, notamment dans les domaines de la géodésie, des opérateurs en douane, de la synchronisation des réseaux, de la gestion de flottes maritimes ou routières, du péage routier, etc...Ce service sera à accès contrôlé pour les utilisateurs finaux et pour les fournisseurs de services à valeur ajoutée.

Les véhicules exploitant ces services commerciaux sont équipés de récepteurs de signaux de radiolocalisation et de calculateurs de données de navigations exploitant les mesures des signaux de radiolocalisation afin de déterminer par exemple la tarification des services. Par conséquent, la viabilité du modèle économique de ces services commerciaux repose sur l'authenticité des données de navigation. Dans le domaine de la réception de signaux de radiolocalisation, il faut disposer des mesures (dites pseudodistances) fournies par des satellites et de données d'éphéméride. Il est relativement facile de protéger les données d'éphéméride pour en garantir l'origine et/ou le contenu. Par contre, les caractéristiques des signaux de mesure sont dans le domaine public, et ne peuvent donc être protégés. Il est alors facile d'émuler ces signaux afin qu'un utilisateur obtienne des coordonnées de position géographique fausses. En effet, on trouve facilement sur internet des offres de dispositifs de leurrage (« Spoofing » en langage anglo-saxon) des pseudodistances et également des notices pour qu'un particulier puisse fabriquer ces dispositifs de leurrage.

Par exemple, dans le cas d'un fournisseur de service de péage d'autoroute, un utilisateur embarque un récepteur de signaux satellitaires dans le véhicule pour authentifier sa position et l'itinéraire emprunté. En fonction de l'itinéraire réalisé (route, section de péage etc...), les données de navigation permettent d'évaluer le prix à payé par l'utilisateur. Le principe du dispositif de leurrage consiste à émettre des signaux imitant ceux émis par les satellites de géo-localisation. Au niveau du récepteur, ces signaux de leurrage sont de puissance plus élevée que celle des signaux émis par les satellites et ainsi couvrent ces derniers signaux. Le dispositif de leurrage permet donc à un utilisateur mal intentionné de simuler un itinéraire existant mais qui n'est pas emprunté par l'utilisateur et décrivant une route sans section payante alors que l'utilisateur est localisé en réalité sur une section payante. Généralement, il s'agit de boitier discret que l'utilisateur dispose à proximité du récepteur des signaux de radiolocalisation.

On connait une première solution divulguée dans le brevet européen EP0904551 qui permet de parer un dispositif de leurrage disposé à proximité du dispositif de réception de signaux satellitaire. Ce dispositif consiste à analyser les caractéristiques des signaux mesurés et de détecter s'il s'agit de signaux émis par un dispositif de leurrage ou par un satellite.

On connait une seconde solution divulguée dans la demande de brevet français FR2921528 qui permet de parer les dispositifs de leurrage en cachant dans les signaux émis par un satellite des données d'authentification selon un algorithme de répartition uniquement connu par l'opérateur de service. Pour contrer ce procédé anti-leurrage, un utilisateur mal intentionné doit connaître le code caché et son algorithme de répartition. Ce procédé anti-leurrage présente le désavantage de devoir mettre en oeuvre un traitement particulier sur les signaux satellitaires émis et un dispositif spécifique d'émission au niveau des satellites entraînant un surcoût de la solution. Cette solution ne peut donc être exploitée pour les récepteurs exploitant les signaux de radiolocalisation d'un système de navigation déjà en place, comme par exemple le système américain GPS (« Global Positioning System »).

"GPS spoofing contermeasures", de Jon S. Warner, http://www.homelandsecurity.org/bulletin/dual%20benefit/warner_gps_spoofing.html, décrit un procédé d'authentification d'une trajectoire d'un mobile, comportant une étape de comparaison d'une première trajectoire calculée à partir de signaux de radiolocalisation et une seconde trajectoire calculée à partir de capteurs inertielles.

On connaît également de l'état de la technique la publication internet intitulée « GPS Spoofing Countermeausures » de Jon S Warner et AL pouvant être extraite de l'URL http://www.homelandsecurity.org/bulletin/dual%20benefit/warner_gps_spoofi ng.html. Ce document concerne la sécurité des systèmes GPS et décrit plusieurs méthodes de protection et de détection contre les techniques de leurrage des systèmes GPS. Cet article décrit notamment des méthodes simples et à faible coût pouvant être adaptées sur les systèmes GPS existants. La septième méthode décrite consiste à utiliser un accéléromètre et une boussole pour calculer une position relative mesurée avec ces deux derniers capteurs. Ce système consiste ensuite à comparer deux positions, l'une est fournie par le système GPS et l'autre est calculée en relatif par rapport à une position de référence. Lorsque le système anti-leurrage détecte une discordance de position, les autorités de contrôle peuvent être averties d'une tentative de leurrage.

Cette méthode comporte l'inconvénient qu'il est nécessaire de connaître une position initiale pour réaliser la comparaison et qu'il est affecté par le biais dans la mesure. Sur une longue durée de mesure, il y a forcément un écart entre la mesure en relatif et la mesure GPS.

L'objectif de l'invention est de fournir une solution anti-leurrage à bas coût pour un récepteur de signaux de radiolocalisation et de fonctionner quel que soit le système de navigation par satellite fournissant les signaux de radiolocalisation.

Plus précisément, l'invention concerne un procédé d'authentification d'une trajectoire de déplacement calculée à partir de signaux de radiolocalisation reçus par un récepteur embarqué dans un mobile. Le procédé comporte les étapes suivantes :
Une première étape de calcul d'un premier profil de mouvement de rotation du mobile autour d'un axe référentiel du mobile à partir de données issues du traitement des signaux de radiolocalisation,
Une seconde étape de calcul d'un second profil de mouvement de rotation du mobile autour du même axe référentiel à partir de données de mouvement issues d'un moyen de mesure indépendant desdits signaux de radiolocalisation,
Une troisième étape de comparaison du premier et du second profil de mouvement de rotation du mobile.
Avantageusement, à une quatrième étape, lorsqu'on détecte une différence entre le premier profil et le second profil, on signale l'utilisation d'un dispositif de leurrage émettant un signal de radiolocalisation falsifié.

Selon une première variante de la troisième étape, les profils de mouvement sont comparés sur une unique portion de profil.

Selon une seconde variante de la troisième étape, les profils de mouvement sont comparés sur au moins deux portions de profil distinctes.

Selon une variante du procédé, le premier et second profil de mouvement de rotation est un profil représentant l'évolution du cap du véhicule au cours du temps.

Selon une variante du procédé, le premier et second profil de mouvement de rotation est un profil représentant l'évolution d'une dérivée n du cap du mobile au cours du temps, avec n au moins égal à 1.

Selon une variante du procédé, le premier et second profil de mouvement de rotation est un profil représentant l'évolution d'une intégration n du cap du mobile au cours du temps.

De préférence, l'axe référentiel du mobile est un axe vertical.

L'invention concerne également le dispositif d'authentification d'une trajectoire de déplacement calculée à partir de signaux de radiolocalisation reçus par un récepteur embarqué dans un mobile. Avantageusement, le dispositif comporte un moyen de mesure de mouvement de rotation du mobile autour d'un axe référentiel du mobile, le dit moyen de mesure étant indépendant des signaux de radiolocalisation et apte à mesurer un mouvement de rotation du mobile et en ce qu'il comporte également des moyens pour calculer un premier profil de mouvement de rotation du mobile autour d'un axe référentiel du mobile à partir de données issues du traitement des signaux radiolocalisation et pour calculer un second profil de mouvement de rotation du mobile autour du même axe référentiel à partir de données issues du moyen de mesure du mouvement.

Avantageusement, le moyen de mesure est apte à effectuer seul des mesures de données de mouvement de rotation embarqué sur le mobile. Selon une variante du dispositif, le moyen de mesure de mouvement comporte un dispositif de mesure de données de mouvement de rotation de type gyromètre. Selon une autre variante du dispositif, le capteur de mouvement est un gyroscope. Selon une autre variante, le moyen de mesure comporte un ensemble de plusieurs dispositifs de mesure de mouvement embarqués sur le mobile, comme par exemple un système automobile de freinage antiblocage (connu sous l'acronyme ABS pour « Antiblockiersystem » en allemand).

Selon une variante, le moyen de mesure est un ensemble comportant des moyens de calcul en communication avec un système de communication apte à traiter des données de localisation du mobile de sorte à calculer un profil de mouvement de rotation du mobile. Le système de communication peut être un réseau cellulaire ou un réseau wifi notamment.

Le procédé et le dispositif d'authentification d'une trajectoire de déplacement calculée à partir des signaux de radiolocalisation forment une solution à bas coût pour contrer les dispositifs de leurrage de récepteurs de navigation par satellite. En effet, les composants de mesure et de calcul nécessaires à la mise en oeuvre de la fonction de calcul de trajectoire présentent un coût dérisoire par rapport à une solution de protection des signaux. D'autre part, le procédé d'authentification selon l'invention est compatible avec tout signal de radiolocalisation et par conséquent elle présente un degré élevé d'intégration sur le marché. De plus, le profil de mouvement de rotation calculé permet de reconnaître une trajectoire suivie et d'avertir un opérateur de service qu'une tentative de fraude sur le service est intentée par l'utilisateur. De cette façon, il est possible d'empêcher toute fraude du service par prévention.

L'invention sera mieux comprise et d'autres avantages apparaîtront à la lecture de la description qui va suivre donnée à titre non limitatif et grâce aux figures annexées parmi lesquelles :
La figure 1 représente un diagramme fonctionnel du dispositif d'authentification tel que revendiqué.
La figure 2 représente un diagramme du procédé d'authentification tel que revendiqué.
La figure 3 représente un schéma symbolisant deux trajectoires distinctes pouvant être suivie par un mobile. Une première trajectoire est la trajectoire réellement suivie par le mobile embarquant le dispositif selon l'invention et la seconde trajectoire est une trajectoire fictive pouvant être utilisée par un système de leurrage.
La figure 4 représente les profils de cap du mobile selon chacune des trajectoires précédentes.

Les méthodes et dispositifs anti-leurrage existant sont mis en oeuvre par modification des signaux de radiolocalisation, par exemple en intégrant dans le signal un code caché très difficilement reproductible. L'invention proposée ne consiste pas à protéger un signal des dispositifs de leurrage mais plutôt de vérifier qu'un signal reçu et utilisé par le récepteur de signaux de radiolocalisation est le signal authentique. Pour illustrer le propos de l'invention, nous allons décrire à titre d'exemple indicatif le cas d'un service de paiement d'utilisation d'autoroute, pour lequel un opérateur de service autorise un utilisateur à rouler sur des tronçons payant en échange d'un prix variant selon le tronçon traversé. Dans cet exemple, le mobile est véhicule automobile de type voiture, moto, poids lourd etc... Le mobile embarquant le dispositif revendiqué ne représente pas une limitation de la portée de l'invention. De façon plus générale, le mobile peut être un véhicule aérien ou marin et également un mobile non transporteur.

Pour mettre en place un tel service, l'utilisateur embarque dans son véhicule un boitier comportant un récepteur de signaux de radiolocalisation R pouvant être un récepteur compatible avec le système de navigation par satellite américain GPS ou un récepteur GALILEO compatible avec le futur système de navigation par satellite européen, ou n'importe quel système de navigation par satellites. Ce boitier comprend également des moyens de calcul µP1 associés avec le récepteur pouvant traiter les signaux de radiolocalisation S1 pour déterminer l'itinéraire et les trajectoires suivis par le véhicule bénéficiant du service. Bien évidemment, d'autres données liées au déplacement du véhicule peuvent être calculées à partir des données des signaux de radiolocalisation.

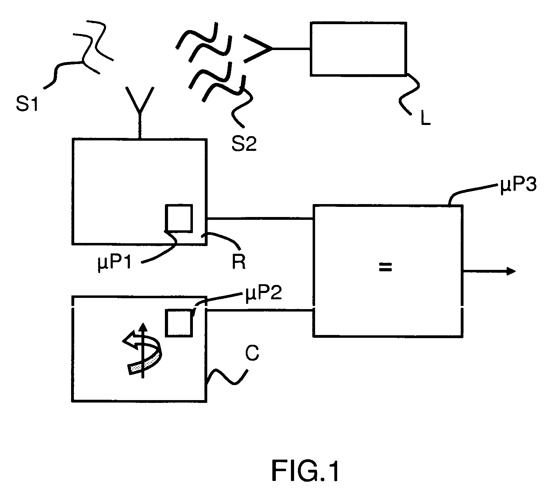

Les données représentant l'itinéraire suivi par le véhicule sont ensuite transmises, via des moyens de communication (non représentés sur la figure 1) dépendant du choix de l'opérateur, à une centrale de gestion de service pour évaluer le prix à payer. Il est possible de tromper un opérateur pour éviter de payer le service utilisé en plaçant à proximité du récepteur de signaux satellite R un dispositif de leurrage L. Ce dispositif de leurrage L émet des signaux S2 imitant les signaux S1 du système de navigation par satellite afin de tromper le récepteur R en fournissant des données fausses pouvant concerner dans ce cas de figure un itinéraire non payant enregistré dans une mémoire du boitier de leurrage L. Les caractéristiques des signaux S2 sont telles que les signaux S2 couvrent le signal S1 de sorte que le récepteur R voit uniquement les signaux S2.

Dans le contexte de cette demande de brevet, il est fastidieux de détailler dans la description de la demande le procédé de calcul d'itinéraire et de trajectoire à partir des données issues du récepteur de signaux de radiolocalisation R ainsi que les moyens de calcul µP1 pour mettre en oeuvre le procédé. Les méthodes et techniques de localisation à partir de données issues d'un récepteur de signaux de radiolocalisation R sont connues de l'homme du métier et largement divulguées dans l'état de la technique, et de plus ne font pas l'objet spécifique de la demande de brevet de la demanderesse. L'objet revendiqué couvre tout moyen de calcul de trajectoire à partir de données de systèmes de navigation par satellite.

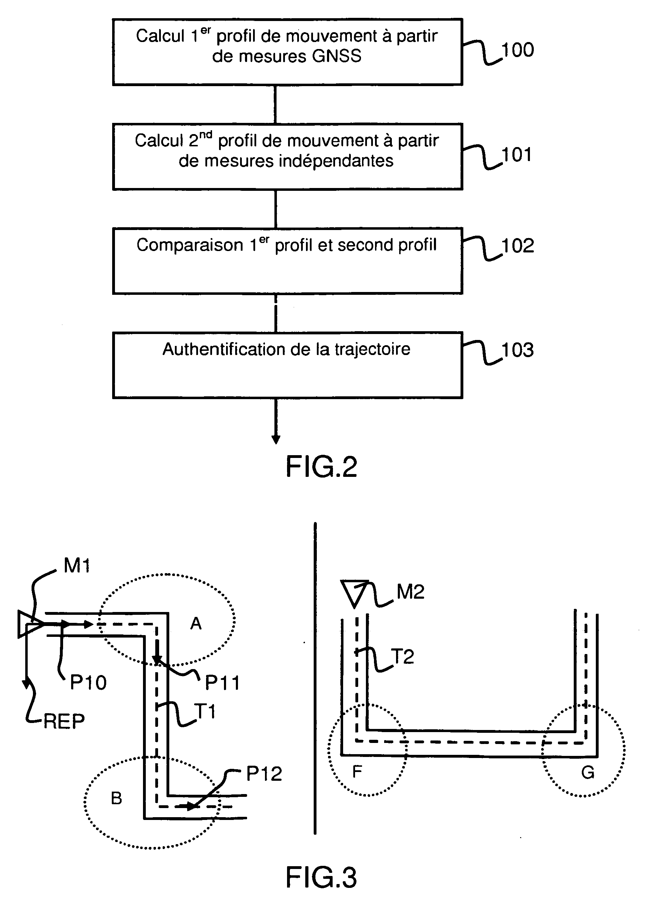

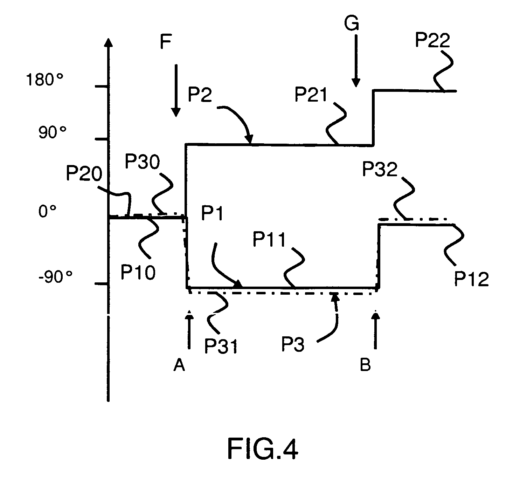

Le calculateur µP1 détermine un itinéraire et une trajectoire du véhicule. Le calculateur µP1 détermine également à partir des données de signaux de radiolocalisation S1 un profil de mouvement de rotation P1 du véhicule M1 illustré en figure 3 représentant l'évolution du cap du véhicule M1 au cours du temps dans un repère de navigation REP, le repère REP comprenant de préférence un axe référentiel vertical non représenté traversant le véhicule M1 de haut en bas et une base référentielle dans le plan horizontal du mobile M1 du repère REP dans laquelle varie le cap P1 du mobile M1. Le mouvement de rotation peut être calculé dans un autre repère. Le profil de mouvement de rotation, tel que représenté sur la figure 4, est le profil d'angle de cap P1 prenant les valeurs P10, P11 et P12 au cours de la trajectoire T1. Selon les données calculées le profil de mouvement de rotation peut également être un profil de vitesse angulaire ou d'accélération angulaire. Le calculateur µP1 est intégré dans le même boitier que le récepteur R. Un même calculateur µP1 de type ASIC (« Application Specific Integrated Circuit ») ou FPGA (« field-programmable gate array ») par exemple peut mettre en oeuvre les fonctions de réception et d'analyse de signaux S1 et la fonction de calcul du profil. Mais une toute autre option de répartition matérielle des fonctions peut être mise en oeuvre sans limiter la portée de l'objet revendiqué.

Le profil P1 est le profil de cap du véhicule authentique, c'est-à-dire qui est calculé par le récepteur de signaux de radiolocalisation à partir des signaux S1 authentiques émis par les satellites. Cependant, lorsqu'un dispositif de leurrage L est placé à proximité du récepteur R et émet des signaux S2 de plus forte puissance que les signaux S1 alors le récepteur R reçoit et analyse les signaux S2 au lieu des signaux S1 et le calculateur µP1 calcule le profil de mouvement de rotation à partir des données issues des signaux S2, les signaux S2 étant des signaux de leurrage imitant des signaux émis par des satellites. Les signaux S2 sont définis de sorte à simuler un itinéraire T2 que suivrait un mobile M2. Cet itinéraire T2 est existant et représente une route non payante de sorte que l'opérateur de service croit que l'utilisateur a emprunté une route gratuite alors qu'en réalité ce dernier à rouler sur une route payante. Le profil du mouvement de rotation P2 représente l'évolution du cap d'un véhicule M2 au cours du temps dans un repère de navigation, le repère comprenant un axe référentiel vertical non représenté traversant le véhicule M2 de haut en bas et une base référentielle dans le plan horizontal du mobile M2 du repère dans laquelle varie le cap P2 du mobile M2. Le profil de mouvement de rotation, tel que représenté sur la figure 4, est le profil d'angle de cap P2 prenant les valeurs P20, P21 et P22 au cours de la trajectoire T2. Selon les données calculées le profil de mouvement de rotation peut également être un profil de vitesse angulaire ou d'accélération angulaire.

Le dispositif revendiqué comprend également un moyen de mesure de mouvement de rotation du mobile C dans un repère identique au repère REP. Le repère de navigation est donc le même. Le moyen de mesure est un capteur autonome, c'est-à-dire un capteur capable d'effectuer à lui seul des mesures du mouvement de rotation du véhicule ou dans le cas d'un ensemble de capteurs, les mesures de mouvement de rotation sont déduites des données produites par l'ensemble des capteurs seuls. Ce capteur est donc indépendant des signaux de radiolocalisation à partir desquels le récepteur de signaux de radiolocalisation détermine le profil de mouvement de rotation P1. Si le récepteur de signaux de radiolocalisation R est trompé par un dispositif de leurrage L, les mesures de mouvement de rotation du capteur restent authentiques et représentent la vraie dynamique du mobile. Le capteur de mouvement est associé un calculateur µP2 déterminant un profil de mouvement de rotation P3 à partir des données mesurées par le capteur. Le profil de mouvement de rotation déterminé par le calculateur µP2, tel que représenté sur la figure 4, est le profil d'angle de cap P3 prenant les valeurs P30, P31 et P32 au cours de la trajectoire T1. Selon la nature du capteur, le profil de mouvement de rotation P3 peut également être un profil de vitesse angulaire ou d'accélération angulaire. Le capteur peut être un gyromètre mesurant une vitesse angulaire, un gyroscope mesurant un angle ou un dispositif de mesure de type centrale à inertie fréquemment utilisée dans un aéronef ou un missile. Le choix du capteur dépend de la précision voulue et du type du mobile et ne limite pas la portée de l'objet revendiqué. Le calculateur µP2 est indépendant du calculateur µP1 ou selon une autre option de répartition matérielle est le même calculateur. Le capteur C et le calculateur µP2 peuvent former un même ensemble matériel indépendant du calculateur µP1. Le choix de l'option de répartition matérielle des fonctions ne limite pas la portée de l'objet revendiqué.

Le dispositif d'authentification de trajectoire calculée à partir des signaux de radiolocalisation S1 ou S2 calcule deux profils de mouvement de rotation. Un premier profil P1 ou P2 est issu des données de radiolocalisation (S1 ou S2) reçues par le récepteur et un second profil P3 est issu des données mesurées par le capteur de mouvement autonome. La trajectoire T1 de la figure 3 décrit une trajectoire en S décrivant un premier virage A à 90° vers la droite et un second virage B à 90° vers la gauche. Par conséquent, le profil P1 qui est issu des données du signal de radiolocalisation S1 et le profil P3 qui est issu des mesures du capteur sont identique ou très proches en fonction de la précision du capteur. Quand bien même le capteur présente un bruit à la mesure et un biais observable, les formes des profils du mouvement de rotation P1 et P3 sont proches en étant légèrement décalée l'une de l'autre mais sont donc assimilés comme identiques (le résultat de corrélation des formes de trajectoires étant élevé). La trajectoire T2 de la figure 3 décrit une trajectoire en U décrivant un premier virage F à 90° à gauche puis un second virage G à 90° encore à gauche. Le profil P2 issu des données de radiolocalisation fausse est donc différent du profil P1 et du profil P3.

Le dispositif d'authentification de trajectoire T1 calculée à partir du signal de radiolocalisation S1 ou S2 comporte également un calculateur µP3 pour comparer le profil P1 ou P2 avec le profil P3. Si les profils comparés sont identiques alors cela signifie que les signaux de radiolocalisation reçus correspondent à la trajectoire mesurée par le capteur autonome. Le dispositif authentifie donc les signaux de radiolocalisation reçus. Par contre, si le profil P3 diffère significativement du profil P2 calculé à partir des signaux de radiolocalisation, alors cela signifie que l'utilisateur utilise un dispositif de leurrage et cherche à frauder l'opérateur. Le dispositif d'authentification comporte donc des moyens pour avertir l'opérateur que l'utilisateur tente de tromper le système. De préférence ces moyens sont les mêmes que les moyens de communications des données de trajectoires vers l'opérateur. Ceci présente un avantage important par rapport à une solution de protection du signal de radiolocalisation car l'utilisateur fraudeur peut être détecté. L'opérateur dispose ainsi d'un moyen de prévention pour empêcher les tentatives de fraude.

La fonction de comparaison est apte à effectuer une corrélation glissante des profils P1 ou P2 et P3, ou alors une corrélation par portion des profils. La fonction de comparaison peut être configurée de sorte à comparer uniquement les portions comportant de l'information d'identification discriminante, notamment les portions de profils représentant des virages de trajectoires. La corrélation par portion de profil permet de réduire les ressources calculatoires et par conséquent la consommation du dispositif. Ceci est avantageux pour les solutions embarquées.

La fonction de comparaison peut être mise en oeuvre par un calculateur µP3 indépendant des deux premiers calculateurs µP1 et µP2, ou dans une autre option de répartition matérielle un même calculateur peut porter les fonctions de calcul des profils et de corrélation des profils. Le choix de la répartition de l'architecture fonctionnelle ne représente pas une limitation.

Le capteur étant autonome et directement intégré dans le boitier de réception de signaux de radiolocalisation, selon un mode de réalisation préférentiel, la solution anti-leurrage est quasiment impossible à contourner. En effet, l'accès aux données du profil P3 doit être réalisé de façon intrusive dans le boitier du récepteur (si celui-ci intègre le capteur) et la connexion mécanique (le plus souvent par piste conductrice sur la carte électronique imprimée) doit être coupée. Un second signal de leurrage identique au signal S2 devrait alors être apporté jusqu'à la fonction de corrélation. Les solutions de capteur de mouvement de rotation peuvent être aujourd'hui complètement intégrées sur le circuit imprimé et les pistes de signaux enterrées dans le circuit. Une telle solution rend le dispositif d'authentification presque impossible à contourner. Toutefois, selon une autre variante, le moyen de mesure est constitué à partir d'un ensemble de capteurs de mouvement de rotation d'un système ABS d'un véhicule automobile, ou par exemple un système de communication de type réseau cellulaire ou réseau wifi permettant de déterminer des profil de trajectoires par calcul de différents points de position du mobile. Les différentes solutions techniques de calcul de profil de mouvement du mobile sont indépendantes du récepteur et du calculateur de profil lié aux signaux de géo-localisation émis par les satellites.

L'invention concerne également le procédé d'authentification du signal de radiolocalisation. Le procédé d'authentification tel qu'illustré à la figure 2 comprend plusieurs étapes qui sont énumérées distinctement mais dont les numéros ne symbolisent en aucun cas un ordre de déroulement ou de traitement des étapes. Le procédé d'authentification de la trajectoire calculée à partir des signaux de radiolocalisation reçus par un récepteur embarqué dans un mobile comporte une première étape 100 de calcul d'un premier profil de mouvement de rotation du mobile autour d'un axe référentiel du mobile à partir de données issues du signal de radiolocalisation, une seconde étape 101 de calcul d'un second profil de mouvement de rotation du mobile autour du même axe référentiel à partir de données de mouvement issues d'un capteur embarqué sur le mobile et une troisième étape 102 de comparaison du premier et du second profil de mouvement de rotation du mobile. De préférence, le procédé comporte une quatrième étape 103 d'authentification du signal de radiolocalisation permettant de signaler une fraude du service auprès de l'opérateur. Les profils de mouvement de rotation calculés peuvent être un profil représentant l'évolution du cap du véhicule au cours du temps ou profil représentant l'évolution de la vitesse angulaire du cap du véhicule au cours du temps ou profil représentant l'évolution de l'accélération angulaire du cap du véhicule au cours du temps ou un profil représentant l'évolution de l'intégrale de la mesure du cap du véhicule au cours du temps. De façon générale, le profil étudié est représentatif du mouvement du véhicule. Le type de profil dépend des moyens de mesure utilisés et des traitements de calcul exécutés sur les données mesurées.

L'invention s'applique à tout domaine exploitant les signaux de radiolocalisation pour le calcul d'itinéraire d'un mobile. Elle concerne les services routiers comme maritimes ou aériens.

## Revendications

1. Procédé d'authentification d'une trajectoire de déplacement (T1) calculée à partir de signaux de radiolocalisation reçus par un récepteur (R) embarqué dans un mobile (M1), **caractérisé en ce qu'**il comporte les étapes suivantes :
- Une première étape (100) de calcul d'un premier profil (P1 ou P2) de mouvement de rotation du mobile autour d'un axe référentiel du mobile à partir de données issues du traitement des signaux de radiolocalisation,
- Une seconde étape (101) de calcul d'un second profil (P3) de mouvement de rotation du mobile autour du même axe référentiel à partir de données de mouvement issues d'un moyen de mesure (C) indépendant desdits signaux de radiolocalisation,
- Une troisième étape (102) de comparaison du premier et du second profil de mouvement de rotation du mobile.

2. Procédé selon la revendication 1, **caractérisé en ce que** les profils de mouvement (P1, P3) sont comparés sur une unique portion de profil.

3. Procédé selon la revendication 1, **caractérisé en ce que** les profils de mouvement (P1, P3) sont comparés sur au moins deux portions de profil distinctes.

4. Procédé selon l'une quelconque des revendications 1 à 3, **caractérisé en ce que** le premier et second profil (P1, P3) de mouvement de rotation est un profil représentant l'évolution du cap du mobile au cours du temps.

5. Procédé selon l'une quelconque des revendications 1 à 3, **caractérisé en ce que** le premier et second profil (P1, P3) de mouvement de rotation est un profil représentant l'évolution d'une dérivée n du cap du mobile au cours du temps.

6. Procédé selon l'une quelconque des revendications 1 à 3, **caractérisé en ce que** le premier et second profil (P1, P3) de mouvement de rotation est un profil représentant l'évolution d'une intégration n du cap du mobile au cours du temps.

7. Procédé selon la revendication 1, **caractérisé en ce que** l'axe référentiel du mobile est un axe vertical.

8. Procédé selon la revendication 1, **caractérisé en ce que**, lorsqu'on détecte une différence entre le premier profil et le second profil, on signale l'utilisation d'un dispositif de leurrage émettant un signal de radiolocalisation falsifié.

9. Dispositif d'authentification d'une trajectoire de déplacement (T1) calculée à partir de signaux de radiolocalisation reçus par un récepteur (R) embarqué dans un mobile (M1), **caractérisé en ce qu'**il comporte un moyen de mesure (C) de mouvement de rotation du mobile autour d'un axe référentiel du mobile, le dit moyen de mesure étant indépendant des signaux de radiolocalisation et apte à mesurer un mouvement de rotation du mobile et **en ce qu'**il comporte également des moyens (µP1, µP2) pour calculer un premier profil de mouvement de rotation du mobile autour d'un axe référentiel du mobile à partir de données issues du traitement des signaux radiolocalisation et pour calculer un second profil de mouvement de rotation du mobile autour du même axe référentiel à partir de données issues du moyen de mesure (C) du mouvement.

10. Dispositif selon la revendication 9, **caractérisé en ce que** le moyen de mesure (C) est apte à effectuer seul des mesures de données de mouvement de rotation.

11. Dispositif selon la revendication 10, **caractérisé en ce que** le moyen de mesure (C) comporte un dispositif de mesure de données de mouvement de rotation embarqué sur le mobile.

12. Dispositif selon la revendication 10, **caractérisé en ce que** le moyen de mesure (C) comporte un ensemble d'au moins deux dispositifs de mesure embarqués sur le mobile pour déterminer les données de mouvement de rotation.

13. Dispositif selon la revendication 10, **caractérisé en ce que** le moyen de mesure (C) est un ensemble comportant des moyens de calcul en communication avec un système de communication apte à traiter des données de localisation du mobile de sorte à calculer un profil de mouvement de rotation du mobile.

## Claims

1. A method for authenticating a displacement trajectory (T1) that is calculated on the basis of radiolocalisation signals received by a receiver (R) on board a moving object (M1), **characterised in that** it comprises the following steps:
- a first step (100) of calculating a first profile (P1 or P2) of rotational movement of the moving object around a reference axis of the moving object on the basis of data that originates from the processing of radiolocalisation signals,
- a second step (101) of calculating a second profile (P3) of rotational movement of the moving object around the same reference axis on the basis of movement data that originates from measuring means (C) independent of said radiolocalisation signals,
- a third step (102) of comparing the first and the second profile of rotational movement of the moving object.

2. The method according to claim 1, **characterised in that** the movement profiles (P1, P3) are compared on a single portion of the profile.

3. The method according to claim 1, **characterised in that** the movement profiles (P1, P3) are compared on at least two distinct portions of the profile.

4. The method according to any one of claims 1 to 3, **characterised in that** the first and second profile (P1, P3) of rotational movement is a profile that represents the evolution of the heading of the moving object over time.

5. The method according to any one of claims 1 to 3, **characterised in that** the first and second (P1, P3) profiles of rotational movement are a profile that represents the evolution of a derivative n of the heading of the moving object over time.

6. The method according to any one of claims 1 to 3, **characterised in that** the first and second (P1, P3) profiles of rotational movement are a profile that represents the evolution of an integration n of the heading of the moving object over time.

7. The method according to claim 1, **characterised in that** the reference axis of the moving object is a vertical axis.

8. The method according to claim 1, **characterised in that**, when a difference is detected between the first profile and the second profile, the use of a spoofing device emitting a falsified radiolocalisation signal is indicated.

9. A device for authenticating a displacement trajectory (T1) calculated on the basis of radiolocalisation signals received by a receiver (R) on board a moving object (M1), **characterised in that** it comprises means for measuring (C) the rotational movement of the moving object around a reference axis of the moving object, said means for measuring being independent of the radiolocalisation signals and being designed to measure a rotational movement of the moving object and **in that** it further comprises means (µP1, µP2) for calculating a first profile of rotational movement of the moving object around a reference axis of the moving object on the basis of data that originates from the processing of the radiolocalisation signals and for calculating a second profile of rotational movement of the moving object around the same reference axis on the basis of data that originates from the means for measuring (C) movement.

10. The device according to claim 9, **characterised in that** the measuring means (C) are designed to independently carry out rotational movement data measurements.

11. The device according to claim 10, **characterised in that** the measuring means (C) comprise a device on board the moving object for measuring rotational movement data.

12. The device according to claim 10, **characterised in that** the measuring means (C) comprise an assembly of at least two measuring devices on board the moving object to determine the rotational movement data.

13. The device according to claim 10, **characterised in that** the measuring means (C) is an assembly that comprises calculating means in communication with a communications system that is designed to process localisation data of the moving object so as to calculate a rotational movement profile of the moving object.

## Patentansprüche

1. Verfahren zum Authentifizieren einer Bewegungsbahn (T1), die von Funkortungssignalen berechnet wird, die von einem an Bord eines beweglichen Objekts (M1) befindlichen Empfänger (R) berechnet wird, **dadurch gekennzeichnet, dass** es die folgenden Schritte beinhaltet:
- einen ersten Schritt (100) des Berechnens eines ersten Profils (P1 oder P2) einer Rotationsbewegung des beweglichen Objekts um eine Referenzachse des beweglichen Objekts anhand von Daten von der Verarbeitung der Funkortungssignale,
- einen zweiten Schritt (101) des Berechnens eines zweiten Profils (P3) der Rotationsbewegung des beweglichen Objekts um dieselbe Referenzachse anhand der Bewegungsdaten von einem Messmittel (C) unabhängig von den Funkortungssignalen,
- einen dritten Schritt (102) des Vergleichens des ersten und des zweiten Rotationsbewegungsprofils des beweglichen Objekts.

2. Verfahren nach Anspruch 1, **dadurch gekennzeichnet, dass** die Bewegungsprofile (P1, P3) auf einem einzigen Profilabschnitt verglichen werden.

3. Verfahren nach Anspruch 1, **dadurch gekennzeichnet, dass** die Bewegungsprofile (P1, P3) auf wenigstens zwei getrennten Profilabschnitten verglichen werden.

4. Verfahren nach einem der Ansprüche 1 bis 3, **dadurch gekennzeichnet, dass** das erste und zweite Rotationsbewegungsprofil (P1, P3) ein Profil sind, das die Entwicklung des Kurses des beweglichen Objekts im Laufe der Zeit repräsentiert.

5. Verfahren nach einem der Ansprüche 1 bis 3, **dadurch gekennzeichnet, dass** das erste und zweite Rotationsbewegungsprofil (P1, P3) ein Profil sind, das die Entwicklung einer Ableitung n des Kurses des beweglichen Objekts im Laufe der Zeit repräsentiert.

6. Verfahren nach einem der Ansprüche 1 bis 3, **dadurch gekennzeichnet, dass** das erste und zweite Rotationsbewegungsprofil (P1, P3) ein Profil sind, das die Entwicklung einer Integration n des Kurses des beweglichen Objekts im Laufe der Zeit repräsentiert.

7. Verfahren nach Anspruch 1, **dadurch gekennzeichnet, dass** die Referenzachse des beweglichen Objekts eine vertikale Achse ist.

8. Verfahren nach Anspruch 1, **dadurch gekennzeichnet, dass**, wenn eine Differenz zwischen dem ersten und dem zweiten Profil erkannt wird, die Verwendung einer ein verfälschtes Funkortungssignal aussendenden Spoofing-Vorrichtung signalisiert wird.

9. Vorrichtung zum Authentifizieren einer Bewegungsbahn (T1), die anhand von Funkortungssignalen berechnet wird, die von einem an Bord eines beweglichen Objekts (M1) befindlichen Empfängers (R) empfangen werden, **dadurch gekennzeichnet, dass** sie ein Mittel (C) zum Messen der Rotationsbewegung des Fahrzeugs um eine Referenzachse des Fahrzeugs umfasst, wobei das Messmittel von den Funkortungssignalen unabhängig ist und eine Rotationsbewegung des Fahrzeugs messen kann, und dadurch, dass sie auch Mittel (µP1, µP2) zum Berechnen eines ersten Rotationsbewegungsprofils des beweglichen Objekts um eine Referenzachse des beweglichen Objekts anhand von Daten der Verarbeitung der Funkortungssignale und zum Berechnen eines zweiten Rotationsbewegungsprofils des Fahrzeugs um dieselbe Referenzachse anhand von Daten des Bewegungsmessmittels (C) umfasst.

10. Vorrichtung nach Anspruch 9, **dadurch gekennzeichnet, dass** das Messmittel (C) selbstständig Messungen von Rotationsbewegungsdaten bewirken kann.

11. Vorrichtung nach Anspruch 10, **dadurch gekennzeichnet, dass** das Messmittel (C) eine Vorrichtung zum Messen von Rotationsbewegungsdaten an Bord des beweglichen Objekts umfasst.

12. Vorrichtung nach Anspruch 10, **dadurch gekennzeichnet, dass** das Messmittel (C) einen Satz von wenigstens zwei Messvorrichtungen an Bord des beweglichen Objekts umfasst, um die Rotationsbewegungsdaten zu ermitteln.

13. Vorrichtung nach Anspruch 10, **dadurch gekennzeichnet, dass** das Messmittel (C) eine Baugruppe ist, die Rechenmittel in Kommunikation mit einem Kommunikationssystem zum Verarbeiten von Ortungsdaten des beweglichen Objekts umfasst, um ein Rotationsbewegungsprofil des beweglichen Objekts zu berechnen.
